# EUROPEAN PATENT SPECIFICATION

(11) **EP 2 014 554 B1**
(45) Date of publication and mention of the grant of the patent: **30.06.2010**
(21) Application number: 08104167.5
(22) Date of filing: 29.05.2008
(51) Int. Cl.: B64G 4/00, B64G 1/64

(54) **Inflatable capture device**
Aufblasbare Einfangeinrichtung
Dispositif de capture gonflable

(43) Date of publication of application: 14.01.2009
(73) Proprietor: Thales Alenia Space Italia S.p.A., 00131 Roma (IT)
(72) Inventor: Pellegrino, Pasquale, 10146 Torino (IT); Nebiolo, Marco, 10146 Torino (IT); Perino, Maria Antonietta, 10146 Torino (IT); Selenu, Monica, 10146 Torino (IT); Palmieri ,Paolo, 10146 Torino (IT)
(74) Representative: Nguyen, Dominique

(56) References cited:
- WO-A-2004/054877
- US-A- 2 928 497
- US-A- 4 195 804
- US-A- 4 852 307
- US-A- 4 936 528
- US-B1- 6 360 995

## Description

The present invention generally refers to the technical field of space applications, and more particularly, to a device for capturing free-flying bodies in space, as defined in the preamble of claim 1.

More in particular, the present invention relates to a capture device to be installed onboard a space apparatus, such as for example a space vehicle, for capturing free-flying bodies in space.

Capture devices are known which use rather complex mechanical structures, such as for example robotic systems comprising mechanical arms controlled by a space vehicle, on which they are installed.

However, the devices of the known art have certain drawbacks.

In general, such devices are characterized by a rather large mass, a considerable volumetric bulk and very high complexity. This is particularly relevant for space applications, in which a greater mass with respect to payload causes a considerable increase of costs, and where the available volume at launch generally represents a critical parameter.

A further drawback of capture devices of the known art is related to the fact that such devices normally comprise a high number of electro-mechanical devices and sophisticated electronic units, which increase the complexity of the structure and of overall system management, therefore reducing its dependability.

US 4,195,804 discloses all the features of the preamble of claim 1.

An object of the present invention is to provide a capture device which is able to solve above said drawbacks, with reference to the known art.

This object is achieved by a capture device as defined and characterized by appended claim 1, in its more general form, and in the dependent claims, regarding particular embodiments of the same.

Another object of the present invention is a space apparatus according to claim 12 and claim 13, regarding one particular embodiment of same.

The invention will be better understood in the following detailed description of its embodiments, which are illustrative, and therefore not limiting, with reference to appended drawings, in which:
- fig. 1 shows a perspective view of a capture device according to an embodiment of the present invention;
- fig. 2 shows a front elevation view of capture device of fig. 1;
- fig. 3 to 8 show front sectional views of capture device of fig. 1, in different operating arrangements, corresponding to a capture sequence of a free-flying body in space;
- fig. 9 shows a perspective sectional view of a further embodiment of a capture device according to the present invention, wherein some elements have been omitted; and
- fig. 10 shows a perspective view of capture device of fig. 9, in which some elements of said device are visible, which are not illustrated in fig. 9.

In the following description, same or like elements are provided with same numeral references in all figures.

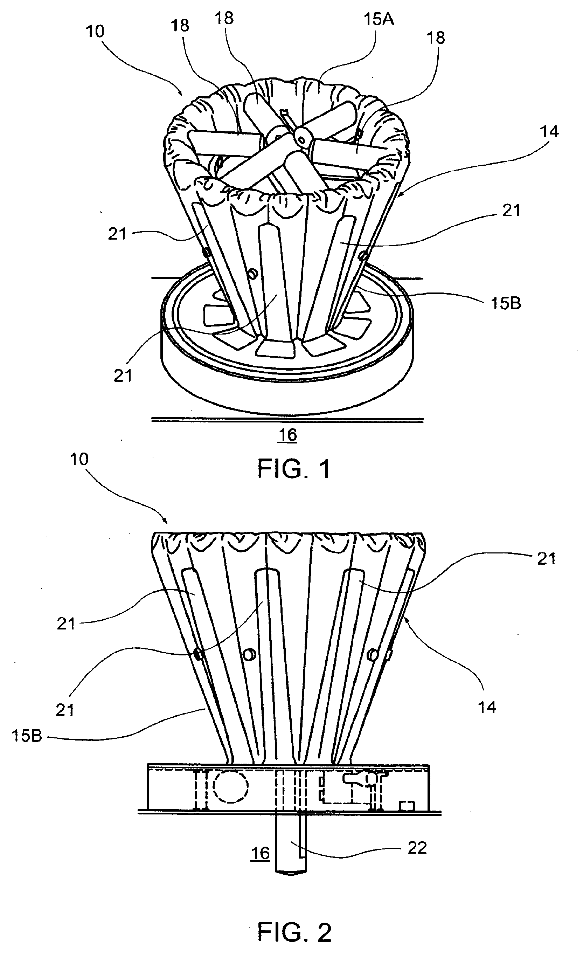

Initially, with reference to fig. 1 and 2, a capture device according to an embodiment of the present invention is generally shown at 10.

The capture device 10 may be installed on board a space apparatus for capturing a generic free-flying body in space.

For such a device other types of use may also be envisaged, like for example meteorite trajectory deflection or out-of-service satellite reentry operations.

The space apparatus provided with an onboard capture device 10 may for example be a space vehicle, such as a satellite, an orbiting space module, an orbiting space platform, a space shuttle, and similar.

Preferably, the space apparatus, on which the capture device 10 is installed, is a space vehicle adapted to orbit around a planet, such as a satellite.

In the examples shown, the free-flying body to be captured is a container 12, for collecting material samples, which are for example taken from the surface of a planet and which may be analyzed in a laboratory. However, the free-flying body may also be another kind of body or object in space, such as for example parts of abandoned space apparatuses, objects or apparatuses released by space vehicles, etc.

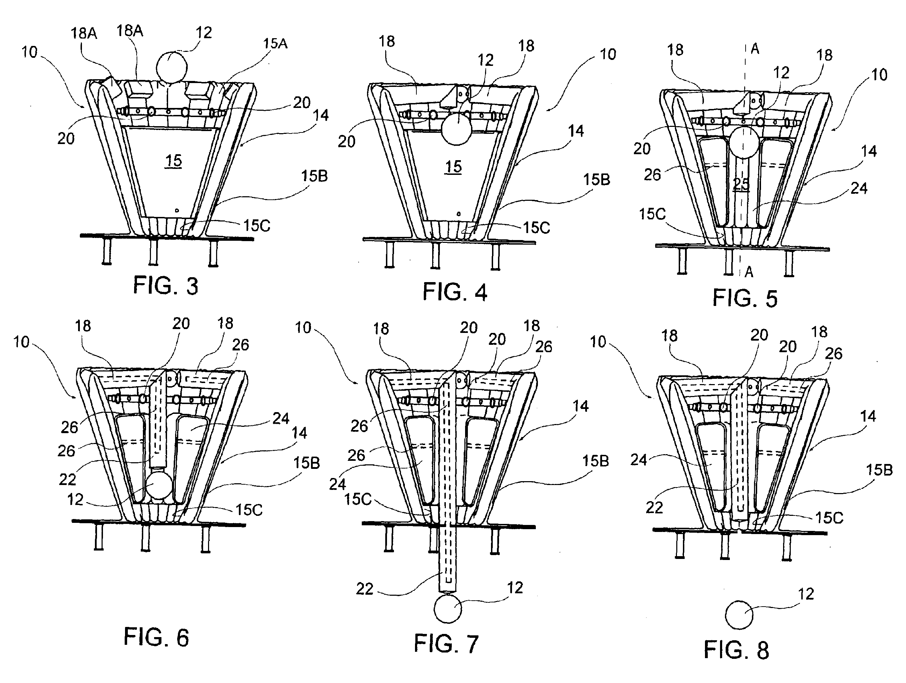

The capture device 10 advantageously comprises an inflatable primary body 14, which is preferably provided in such a way as to comprise a single inflatable chamber, which may define, at least partially, a capture volume 15 (fig. 3), for receiving the container 12.

In the embodiments shown in figures, the primary body 14 has a substantially basket-like shape. The basket 14 comprises an inlet mouth 15A through which the container 12 may pass, so that said container may be received inside the capture volume 15.

The basket 14 advantageously has a converging shape, preferably a substantially frusto-conical shape.

More in particular, in the embodiments shown in figures, the basket 14 converges according to a direction which goes from the inlet mouth 15A to a bottom portion 15B of basket 14.

In the exemplary embodiments, the basket, in its completely inflated arrangement, has a frusto-conical shape, which is characterized, in a non limiting way, by an angle of the cone of about 20°, a diameter of the inlet mouth 15A between around 600 (mm) and around 1000 (mm) and height between around 1000 (mm) and around 1300 (mm).

According to other embodiments of the present invention, the primary body 14 may be however provided with a shape different from the shape of a frusto-conical basket, for example a cylindrical shape.

Preferably, basket 14 comprises an outlet mouth 15C (fig. 3) which is opposed to inlet mouth 15A. More in particular, the outlet mouth is positioned at the bottom portion 15B of basket 14.

According to an embodiment of the invention, the outlet mouth 15C may communicate with a storage volume 16, which may house the container 12, once the capture phase has been completed. Preferably, the storage volume 16 is defined by a suitable enclosure, which is positioned, with respect to outlet mouth 15C, on the side opposite to capture volume 15.

According to an embodiment of the invention, capture device 10 comprises barrier means for trapping container 12 inside capture volume 15, once said container has passed through inlet mouth 15A of basket 14. In practice, barrier means are such as to obstruct, at least partially, inlet mouth 15A, in order to prevent container 12, after being received inside capture volume 15, to exit basket through this mouth, for instance, by bouncing off a portion of basket 14.

According to a particularly advantageous embodiment, barrier means comprise a plurality of inflatable arms 18, which may move from a stand-by arrangement to an operating arrangement. In the stand-by arrangement, inflatable arms are deflated and preferably curled, each one in a respective housing seat 18A (fig. 3). For example, each arm 18 may be suitably folded for allowing container 12 to pass through inlet mouth 15A of device 10.

In their operating arrangement, inflatable arms 18 are inflated, for example by means of a gas, and protrude from the basket 14.

According to a preferred embodiment, inflatable arms 18 are arranged along the inlet mouth of basket 14, for example in equally distanced angular positions, and protrude from basket, extending from its periphery towards the center of said mouth.

In the embodiments shown, in which the inlet mouth is substantially circular, inflatable arms 18 extend, in particular in a radial direction, from the periphery towards the center of said mouth.

According to an embodiment of the invention, the barrier means comprise auxiliary barrier means, for increasing the obstruction of inlet mouth 15A. The provision of auxiliary barrier means ensure that the container 12 may be trapped inside the capture volume 15, once the container is received inside said space and barrier means are activated. In other words, with reference to the embodiments shown, the auxiliary barrier means allow the container 12 to be trapped inside the capture volume 15, when inflatable arms 18 are disposed in their operating arrangement.

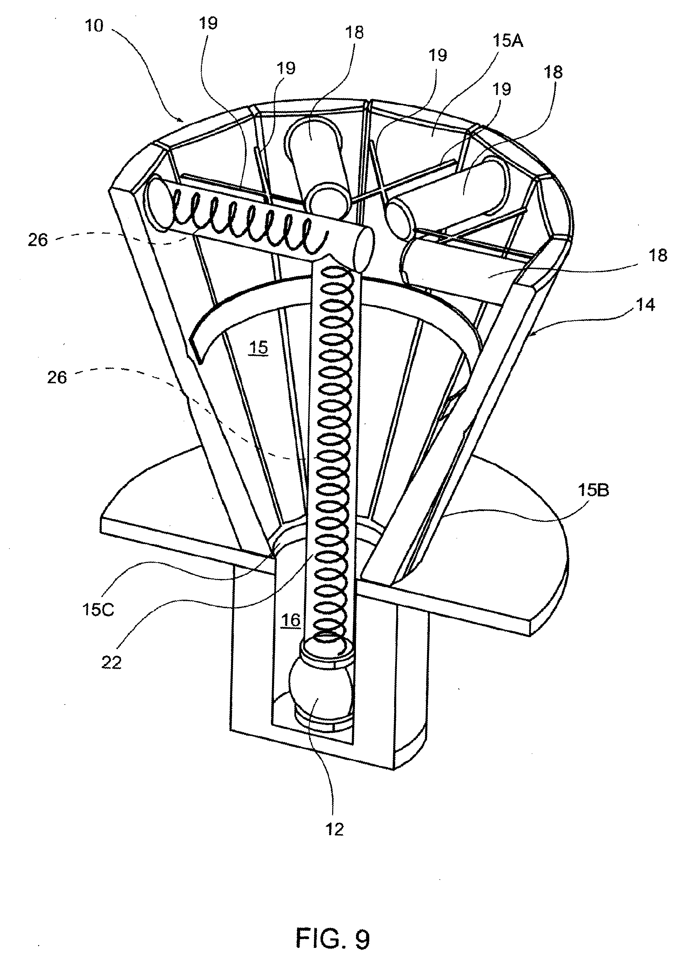

With reference to the embodiments shown in figures, the auxiliary barrier means comprise a plurality of bands or barrier belts 19 (clearly visible in fig. 9), which extend between the inflatable arms 18 according to a generally net-like or web-like arrangement, when said arms are positioned in the operating arrangement. More in particular, according to an embodiment of the invention, the auxiliary barrier means comprise band pairs, positioned in an "X"-like arrangement, preferably connected to each other or formed by a single "X"-shaped piece, wherein each band has an end fixed to the basket 14 and an opposite end connected to one of said inflatable arms 18.

The barrier bands 19 for example prevent the container 12 from exiting the capture volume, by passing between two consecutive inflatable arms 18.

This may happen, if the size of container 12 is reduced to such an extent, allowing it to pass through the free space between said arms.

Therefore, bands 19 are preferably sized according to size of container 12 and inlet mouth 15A of capture device 10, such as to ensure that container 12, once it has entered capture volume 15, is not able to exit said space.

The capture device 10 advantageously comprises a sensing system, for sensing the presence of container 12 inside capture volume 15, when said container passes through a sensing region, for example a sensing plane arranged transversally with respect to a symmetry axis of basket 14, which is directed along a line connecting the inlet mouth 15A to the outlet mouth 15C.

According to an embodiment, the sensing system comprises sensing means, which are disposed inside the capture volume 15. In the example shown in the figures, sensing means comprise a plurality of optoelectronic devices, such as photoelectric sensors 20 (fig. 3), which are mounted on a supporting structure, provided on a wall of basket 14, which interacts with capture volume 15.

Advantageously, sensors 20 are provided downstream of the inflatable arms 18, looking from the inlet mouth 15A towards the bottom portion 15B of basket 14, i.e. in the incoming direction of container 12, when it enters capture volume 15.

According to an embodiment of the invention, the capture device 10 comprises cable protection pockets 21, which internally enclose electric cables for connecting sensors 20 and optional thermal components. Such protection pockets preferably extend in a longitudinal direction, from inlet mouth 15A to outlet mouth 15C of basket 14, along a wall of basket, which is positioned on the opposite side of capture volume 15.

According to the embodiments shown, the capture device 10 comprises pushing means for pushing the container 12 towards the storage volume 16.

According to an embodiment of the invention, pushing means comprise an inflatable pushing portion 22, which is associated to one of inflatable arms 18. In particular, this pushing portion 22, in its inflated configuration, extends from its associated arm towards the outlet mouth 15C of basket 14. Preferably, pushing portion 22, in its completely inflated configuration, extends from respective inflatable arm in such a way as to pass through the outlet mouth 15C of basket 14.

According to a currently preferred embodiment, the inflatable chamber of inflatable primary body 14 and the inflatable arms 18 are such as to be fluidly communicating with each other. Similarly, also pushing portion 22 and its associated inflatable arm may fluidly communicate with each other.

In particular, the inflatable chamber of primary body 14, the inflatable arms 18 and the pushing portion 22 have different inflation activation pressures.

Preferably, inflatable chamber of basket 14 and inflatable arms 18, as well as the pushing portion 22 and associated inflatable arm, are interconnected by means of suitable valve means (not shown). Such valve means may be activated when the inflatable chamber of basket 14 has reached a predetermined inflation pressure, in order to allow the following inflation of inflatable arms. Similarly, valve means provided between pushing portion 22 and respective inflatable arm may be activated when internal pressure of said arm reaches a predetermined threshold value, to therefore allow inflation of pushing portion 22.

Since the inflatable chamber of basket 14, the inflatable arms 18 and the pushing portion 22 may communicate with each other, and since different inflation triggering pressures are respectively set up, it is possible to inflate basket 14, inflatable arms 18 and pushing portion 22 according to a predetermined inflation sequence.

Advantageously, the capture device 10 includes inflatable guiding elements 24 (fig. 5), which are provided inside capture volume 15 for guiding container 12 towards storage volume 16.

According to embodiments shown, inflatable guiding elements 24 extend along a wall of basket 14 surrounding an axis AA (fig. 5) of said basket. Preferably, axis AA is a symmetry axis of basket 14, which is directed along a line connecting the inlet mouth 15A with the outlet mouth 15C.

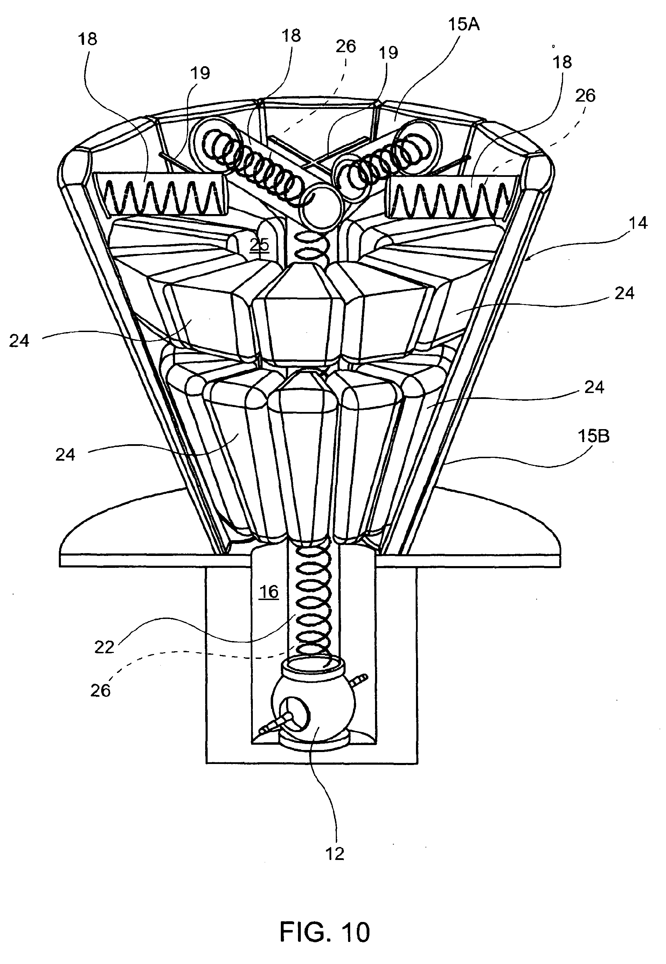

According to an embodiment of the invention, the inflatable guiding elements 24 comprise a single inflatable chamber (fig. 5). However, according to another embodiment of the invention, inflatable guiding elements 24 may comprise a plurality of separate elements, each provided with a respective inflatable chamber (fig. 10).

The inflatable guiding elements 24 are such as to define a guiding path or passage 25 (fig. 5 and 10), for guiding container 12 towards outlet mouth 15C of basket 14.

Preferably, guiding elements 24 are able to exert a centering action, in order to align container 12 with outlet mouth 15C, before and/or during the phase, in which the inflatable pushing portion 22 is pushing on said container.

With reference to the illustrated embodiments, the operation of a capture device 10 according to the present invention is described in the following.

Initially, basket 14 is deflated and in positioned in a curled configuration, for example is folded together, in a respective housing seat.

Shortly before start of capture phase, basket 14 is rapidly inflated by means of a suitable inflation apparatus, and is preferably positioned so that inlet mouth 15A crosses the trajectory of container 12.

In this phase, inflatable arms 18 are in a stand-by arrangement. More in particular, inflatable arms 18 remain in the stand-by arrangement, until container 12, after passing through inlet mouth of basket 14, travels through sensing region defined by sensors 20.

When this takes place, sensors 20 send a signal for starting inflation of arms 18, of optional inflatable guiding elements 24, if present, and of pushing portion 22. Advantageously, inflation sequence comprises a preliminary phase, in which arms 18 are inflated, followed by inflation of inflatable guiding elements 24 and final inflation of pushing portion 22. Due to preliminary inflation of inflatable arms 18 and, when present, the provision of optional barrier bands 19, a quick trapping of container 12 inside capture volume 15 is ensured, preventing it from exiting through inlet mouth 15A.

The pushing portion 22 progressively becomes inflated, passing through the guiding passage 25 defined by inflatable guiding elements 24, if present, pushing the container 12 towards the outlet mouth 15C, until it is guided into the storage volume 16. This pushing action on container 12 is particularly facilitated by the shape of capture device, especially when inflatable guiding elements 24 are absent, since the container 12 is forced by the geometry of basket 14 to move towards the outlet mouth 15C, in order to be introduced into the storage volume 16.

Based on above description, it is therefore possible to understand how a capture device according to the present invention may solve above said drawbacks, with reference to the known art.

In particular, the provision of an inflatable capture device advantageously allows a significant reduction both of mass and bulk of such a device, and therefore a great reduction of costs, in particular of costs relating to same capture device.

Moreover, the provision of an inflatable capture device allows a conspicuous reduction of the number of electro-mechanical devices and electronic units required for command and control of such a device, therefore greatly improving the dependability of same device.

It is evident that modifications and/or variations may be introduced with respect to above described and illustrated example.

According to a currently preferred embodiment of the invention, the capture device 10 advantageously comprises a rearm system, for implementing a multi-capture operating mode of said device.

In the embodiments shown, the rearm system includes a plurality of restoring means, which are associated to inflatable arms 18 and to inflatable pushing portion 22.

According to the embodiment shown in fig. 9 and 10, the restoring means comprise elastic restoring means, which are coil springs 26 in the example shown, and which are inserted inside each inflatable arm 18 and inside the inflatable pushing portion 22. However, according to other embodiments of the invention, the elastic restoring means may comprise, instead of springs, other types of components, such as elastic ropes.

Preferably, restoring means 26 are also provided inside the optional inflatable guiding elements 24.

When the inflatable arms 18 are in their stand-by position, the restoring springs 26 are in an unloaded state, whereas they are elastically loaded when inflatable arms are in their operating position. More in particular, when the inflatable arms 18 are inflated, and are moved from a stand-by position to an operating arrangement, the springs 26 counteract the inflation, and tend to return said arms in their stand-by position. When inflatable arms are depressurized, springs 26 are no more counterbalanced by gas pressure, allowing inflatable arms to return in their stand-by position. In this way, the capture device is now ready for a successive capture phase.

The basic principles of the invention always hold true, but its embodiments and details may be subject to wide modifications with respect to the description and illustrations, which are only provided as non limiting examples, without leaving the scope of the invention, as defined by appended claims.

## Claims

1. Capture device (10) for capturing at least a free-flying body (12) in space, which may be installed onboard a space apparatus, said capture device comprising :
- an inflatable primary body (14),
- a capture volume (15) which is at least partially defined by the inflatable primary body (14),
- an inlet mouth (15A) which interacts with capture volume (15) and which is provided in such a way as to let the free-flying body (12), to be captured, to pass through it, allowing the capture volume (15) to receive said body (12),
- an outlet mouth (15C) which is provided so that said free-flying body (12) may pass through it, for said body to be received inside a storage volume (16), which communicates with said outlet mouth (15C),
said capture device **characterized in that** it comprises pushing means (22) for pushing the free-flying body (12), so that said body passes through the outlet mouth (15C).

2. Capture device (10) according to claim 1, wherein said inflatable primary body (14) has a shape converging along a direction extending from inlet mouth (15A) towards the outlet mouth (15C).

3. Capture device (10) according to claim 2, wherein said inflatable primary body (14) has a substantially frusto-conical shape.

4. Capture device (10) according to anyone of preceding claims, including barrier means (18) for obstructing, at least partially, the inlet mouth (15A) of capture device (10), in order to trap the free-flying body (12) inside the capture volume (15).

5. Capture device (10) according to claim 4, wherein the barrier means comprise a plurality of inflatable arms (18), which may move from a standby arrangement, in which they are deflated and folded together, each one positioned in a respective seat, to an operating arrangement, in which said arms protrude from the inflatable primary body (14), in order to obstruct, at least partially, the inlet mouth (15A).

6. Capture device (10) according to claim 5, comprising auxiliary barrier means, for increasing the obstruction of inlet mouth (15A) in order to ensure trapping of free-flying body (12) inside capture volume (15), wherein the auxiliary barrier means comprise a plurality of barrier bands (19), which extend between inflatable arms (18), according to a generally net-like or web-like arrangement, when said arms (18) are in their operating arrangement.

7. Capture device (10) according to anyone of claims 4 to 6, including a sensing system for defining a sensing region, the sensing system sending a signal for activating said barrier means (18), when said free-flying object (12) travels through said sensing region.

8. Capture device (10) according to claim 7, wherein said sensing system comprises a plurality of sensors (20), which are mounted after the barrier means (18), with respect to the incoming direction of free-flying body (12) inside capture volume (15).

9. Capture device (10) according to anyone of preceding claims, wherein the inflatable primary body (14) comprises a wall cooperating with capture volume (15), and wherein capture device (10) comprises inflatable guiding elements (24) arranged along said wall of inflatable primary body (14), the inflatable guiding elements (24) being adapted to define a path (25) for guiding said free-flying body (12) towards the outlet mouth (15C) of said capture device (10).

10. Capture device (10) according to anyone of preceding claims comprising a rearm system, for allowing multi-capture operating mode of same device.

11. Capture device (10) according to claim 10, as depending from claim 5, wherein the rearm system comprises restoring means (26), which are provided at least inside said inflatable arms (18), the restoring means (26) being able to counteract the inflation of said inflatable arms (18).

12. Space apparatus including a capture device (10) according to anyone of preceding claims.

13. Space apparatus according to claim 12, wherein the space apparatus is a space vehicle.

## Patentansprüche

1. Einfangvorrichtung (10) zum Einfangen von wenigstens einem frei fliegenden Körper (12) im Raum, die an Bord eines Raumgeräts installiert sein kann, wobei die Einfangvorrichtung Folgendes umfasst:
- einen aufblasbaren Hauptkörper (14),
- ein Einfangvolumen (15), das von dem aufblasbaren Hauptkörper (14) wenigstens teilweise definiert wird,
- eine Einlassöffnung (15A), die mit Einfangvolumen (15) interagiert und so gestaltet ist, dass sie den einzufangenden frei fliegenden Körper (12) durchlässt, so dass das Einfangvolumen (15) den Körper (12) aufnehmen kann;
- eine Auslassöffnung (15C), die so gestaltet ist, dass der frei fliegende Körper (12) durch sie passieren kann, damit der Körper in einem Aufbewahrungsvolumen (16) aufgenommen werden kann, das mit der Auslassöffnung (15C) in Verbindung ist,
wobei die Einfangvorrichtung **dadurch gekennzeichnet ist, dass** sie ein Schubmittel (22) zum Schieben des frei fliegenden Körpers (12) umfasst, so dass der Körper durch die Auslassöffnung (15C) passiert.

2. Einfangvorrichtung (10) nach Anspruch 1, wobei der aufblasbare Hauptkörper (14) eine Form hat, die in einer Richtung von der Einlassöffnung (15A) zur Auslassöffnung (15C) konvergiert.

3. Einfangvorrichtung (10) nach Anspruch 2, wobei der aufblasbare Hauptkörper (14) im Wesentlichen eine Kegelstumpfform hat.

4. Einfangvorrichtung (10) nach einem der vorherigen Ansprüche mit einer Barriere (18), um die Einlassöffnung (15A) der Einfangvorrichtung (10) wenigstens teilweise zu versperren, um den frei fliegenden Körper (12) innerhalb des Einfangvolumens (15) einzuschließen.

5. Einfangvorrichtung (10) nach Anspruch 4, wobei die Barriere mehrere aufblasbare Arme (18) umfasst, die sich von einer Bereitschaftsanordnung, in der sie unaufgeblasen und zusammengefaltet sind, jeder in einem jeweiligen Sitz befindlich, in eine Betriebsanordnung bewegen können, in der die Arme von dem aufblasbaren Hauptkörper (14) vorstehen, um die Einlassöffnung (15A) wenigstens teilsweise zu versperren.

6. Einfangvorrichtung (10) nach Anspruch 5, die eine zusätzliche Barriere zum Vergrößern der Versperrung der Einlassöffnung (15A) umfasst, um das Einschließen des frei fliegenden Körpers (12) innerhalb des Einfangvolumens (15) zu gewährleisten, wobei die zusätzliche Barriere mehrere Barrierenbänder (19) umfasst, die zwischen aufblasbaren Armen (18) in einer allgemein netzähnlichen oder gewebeartigen Anordnung verlaufen, wenn die Arme (18) in ihrer Betriebsanordnung sind.

7. Einfangvorrichtung (10) nach einem der Ansprüche 4 bis 6 mit einem Abfühlsystem zum Definieren einer Abfühlregion, wobei das Abfühlsystem ein Signal zum Aktivieren der Barriere (18) aussendet, wenn das frei fliegende Objekt (12) durch die Abfühlregion fliegt.

8. Einfangvorrichtung (10) nach Anspruch 7, wobei das Abfühlystem mehrere Sensoren (20) umfasst, die in Bezug auf die Ankunftsrichtung des frei fliegenden Körpers (12) innerhalb des Einfangvolumens (15) hinter der Barriere (18) montiert sind.

9. Einfangvorrichtung (10) nach einem der vorherigen Ansprüche, wobei der aufblasbare Hauptkörper (14) eine mit dem Einfangvolumen (15) zusammenwirkende Wand umfasst und wobei die Einfangvorrichtung (10) aufblasbare Führungselemente (24) umfasst, die entlang der Wand des aufblasbaren Hauptkörpers (14) angeordnet sind, wobei die aufblasbaren Führungselemente (24) so gestaltet sind, dass sie eine Bahn (25) zum Führen des frei fliegenden Körpers (12) in Richtung auf die Auslassöffnung (15C) der genannten Einfangvorrichtung (10) definieren.

10. Einfangvorrichtung (10) nach einem der vorherigen Ansprüche, das ein Neuaktivierungssystem umfasst, das einen Mehrfacheinfangbetriebsmodus derselben Vorrichtung ermöglicht.

11. Einfangvorrichtung (10) nach Anspruch 10 in Abhängigkeit von Anspruch 5, wobei das Neuaktivierungssystem Rückstellmittel (26) umfasst, die wenigstens innerhalb der aufblasbaren Arme (18) vorgesehen sind, wobei die Rückstellmittel (26) dem Aufblasen der aufblasbaren Arme (18) entgegenwirken können.

12. Raumgerät mit einer Einfangvorrichtung (10) nach einem der vorherigen Ansprüche.

13. Raumgerät nach Anspruch 12, wobei das Raumgerät ein Raumfahrzeug ist.

## Revendications

1. Dispositif de capture (10), pour capturer au moins un corps en vol libre (12) dans l'espace, pouvant être installé sur un engin spatial, ledit dispositif de capture comprenant :
- un corps primaire gonflable (14) ;
- un volume de capture (15), au moins partiellement défini par le corps primaire gonflable (14) ;
- une embouchure d'entrée (15A), coopérant avec le volume de capture (15) et agencé de sorte à permettre au corps en vol libre (12), devant être capturé, de le traverser, pour permettre la réception dudit corps (12) dans le volume de capture (15) ;
- une embouchure de sortie (15C), agencé de sorte que ledit corps en vol libre (12) peut le traverser, en vue de la réception dudit corps dans un volume de stockage (16), communiquant avec ladite embouchure de sortie (15C) ;
ledit dispositif de capture étant **caractérisé en ce qu'**il comprend un moyen poussoir (22) pour pousser le corps en vol libre (12), de sorte que ledit corps passe à travers l'embouchure de sortie (15C).

2. Dispositif de capture (10) selon la revendication 1, dans lequel ledit corps primaire gonflable (14) a une forme convergeant le long d'une direction s'étendant de l'embouchure d'entrée (15A) vers l'embouchure de sortie (15C).

3. Dispositif de capture (10) selon la revendication 2, dans lequel ledit corps primaire gonflable (14) a pratiquement une forme en tronc de cône.

4. Dispositif de capture (10) selon l'une quelconque des revendications précédentes, englobant des moyens de barrière (18) pour obstruer au moins partiellement l'embouchure d'entrée (15A) du dispositif de capture (10), pour piéger le corps en vol libre (12) à l'intérieur du volume de capture (15).

5. Dispositif de capture (10) selon la revendication 4, dans lequel les moyens de barrière comprennent plusieurs bras gonflables (18), pouvant se déplacer d'une position d'attente, dans laquelle ils sont dégonflés et repliés, chacun étant positionné dans un siège respectif, vers une position opérationnelle, dans laquelle lesdits bras débordent du corps primaire gonflable (14), pour obstruer au moins partiellement l'embouchure d'entrée (15A).

6. Dispositif de capture (10) selon la revendication 5, comprenant des moyens de barrière auxiliaires, pour accroître l'obstruction de l'embouchure d'entrée (15A), en vue d'assurer le piégeage du corps en vol libre (12) à l'intérieur du volume de capture (15), les moyens de barrière auxiliaires comprenant plusieurs bandes de barrière (19), s'étendant entre les bras gonflables (18) dans un agencement généralement en forme de filet ou de toile, lorsque lesdits bras (18) se trouvent dans leur position opérationnelle.

7. Dispositif de capture (10) selon l'une quelconque des revendications 4 à 6, englobant un système de détection pour définir une région de détection, le système de détection émettant un signal pour activer lesdits moyens de barrière (18) lorsque ledit objet en vol libre (12) se déplace à travers ladite région de détection.

8. Dispositif de capture (10) selon la revendication 7, dans lequel ledit système de détection comprend plusieurs capteurs (20), montés derrière les moyens de barrière (18) par rapport à la direction d'entrée du corps en vol libre (12) à l'intérieur du volume de capture (15).

9. Dispositif de capture (10) selon l'une quelconque des revendications précédentes, dans lequel le corps primaire gonflable (14) comprend une paroi coopérant avec le volume de capture (15), le dispositif de capture (10) comprenant des éléments de guidage gonflables (24) agencés le long de ladite paroi du corps primaire gonflable (14), les éléments de guidage gonflables (24) étant adaptés pour définir une trajectoire (25) pour guider ledit corps en vol libre (12) vers l'embouchure de sortie (15C) dudit dispositif de capture (10).

10. Dispositif de capture (10) selon l'une quelconque des revendications précédentes, comprenant un système de réarmement, pour permettre un mode opérationnel à captures multiples du même dispositif.

11. Dispositif de capture (10) selon la revendication 10, dépendant de la revendication 5, dans lequel le système de réarmement comprend des moyens de rappel (26) agencés au moins à l'intérieur desdits bras gonflables (18), les moyens de rappel (26) étant capables de contrecarrer le gonflement desdits bras gonflables (18).

12. Engin spatial englobant un dispositif de capture (10) selon l'une quelconque des revendications précédentes.

13. Engin spatial selon la revendication 12, dans lequel l'engin spatial est un véhicule spatial.
